# EUROPEAN PATENT APPLICATION

(11) **EP 2 853 916 A1**
(43) Date of publication of application: **01.04.2015**
(21) Application number: 13186003.3
(22) Date of filing: 25.09.2013
(51) Int. Cl.: G01S 13/89, G01S 13/93

(54) **A method and apparatus for providing a 3-dimensional ground surface model used for mapping**

(71) Applicant: Application Solutions (Electronics and Vision) Limited, Lewes, East Sussex BN7 2 AQ (GB)
(72) Inventor: Bone, Peter, Lewes, Sussex BN7 2SA (GB); Gagnon, Peter, Brighton, BN15PS (GB); Ermilios, Pentelis, 23827 Wensin (DE); Wibberley, Dave, Brighton, Sussex BN1 6RG (GB)
(74) Representative: Büchner, Jörg

(57) **Abstract**

A method for providing a 3-dimensional ground surface model of a ground surface surrounding a vehicle (1), the method comprising providing (S1) radar data on the surrounding ground surface by a built-in radar system (3A) of the vehicle (1); generating (S2) a radar surface height map on the basis of the provided radar data; and deriving (S3) the 3-dimensional ground surface model from the generated radar surface height map.

## Description

There are different applications in a vehicle such as a car that require a surface model of a ground surface surrounding the respective vehicle. For example, many vehicles are equipped with onboard cameras for a surround view system. Cameras can be provided to give a view to the driver of the surrounding of the respective vehicle. Such a surround view of the surroundings is generated from the camera images output by the onboard cameras. The cameras' images are processed using image transformations and by performing image stitching. On the basis of the camera images a composite surround view image is generated which can be displayed on a display of the vehicle to the driver.

Camera images provided by the onboard cameras are processed by employing image processing algorithms, or other applications such as automatic obstacle detection and range finding. These applications require a mapping of coordinates between a camera image and the ground on which the vehicle moves.

The mapping of coordinates or points within the camera images to the ground surface requires a calibration of the cameras as well as an accurate model of the ground surface plane so that features detected in the camera images can be mapped to the ground in the coordinate system of the vehicle. Cameras have to be calibrated with respect to their position and orientation relative to the coordinate system of the vehicle. Calibration of the cameras can be performed after fabrication of the vehicle or/and continuously while the vehicle is in use driving along roads (online calibration). Online calibration of the onboard cameras of the vehicle requires an accurate model for the shape of the ground surface. Any error in the ground surface model results in an online calibration error of the onboard cameras.

Also, the surround view mapping in a vehicle requires an accurate model of the ground surface to map the camera images onto. Any error in the ground surface model results in an error in the composite surround view image displayed to the driver which becomes evident from a misalignment between the camera views.

In conventional systems, only a very simple 2-dimensional ground surface model is used, i.e. it is assumed that the ground surface is a perfectly flat plane and orthogonal to a Z-axis of the vehicle's coordinate system. Accordingly, in any situation where the ground surface is not plane, the camera calibration does result in an error proportional to the deviation of the real ground surface compared to a flat and aligned plane. Also, the surround view mapping does contain errors due to the fact that top-down views are mapped onto an inaccurate surface. When the car is moving on a ground surface, the shape of the ground surface is constantly changing. Accordingly, there can be strong deviations of the real ground surface from a perfectly flat plane surface. For example, significant causes of a deviation from a flat plane are road cambers and kerbs or pavements. The deviations become even more significant in an off-road driving situation where the vehicle is moving on uneven ground.

Accordingly, it is an object of the present invention to provide a method and an apparatus for providing a 3-dimensional ground surface model of a ground surface surrounding a vehicle which increases the accuracy of camera calibration of onboard cameras and improves surround view mapping.

This object is achieved by a method comprising the steps of claim 1.

According to a first aspect, a method for providing a 3-dimensional ground surface model of a ground surface surrounding a vehicle is provided, the method comprising: providing radar data on the surrounding ground surface by a built-in radar system of the vehicle, generating a radar surface height map on the basis of the provided radar data.

In a possible embodiment of the method according to the first aspect of the present invention a ground surface model is derived from the radar surface height map and used as the 3-dimensional ground surface model.

In a possible embodiment of the method according to the first aspect of the present invention the generated radar surface height map is directly used as the 3-dimensional ground surface model.

In a possible embodiment of the method according to the present invention, the built-in radar system provides the radar data on the surrounding ground surface in a predetermined radar data grid.

In a further possible embodiment of the method according to the present invention, the radar data provided by the built-in radar data system is filtered to reduce signal noise.

The invention further provides according to a second aspect a method for performing surround view stitching of camera images provided by onboard cameras of a vehicle on the basis of the 3-dimensional ground surface model provided by the method according to the first aspect of the present invention to generate a composite surround view image displayed to a driver of the vehicle.

According to a further third aspect of the present invention, a method for performing a continuous camera calibration of onboard cameras of the vehicle is provided on the basis of the 3-dimensional ground surface model provided by the method according to the first aspect of the present invention.

According to a fourth aspect of the present invention, a method for performing obstacle range finding is provided using the 3-dimensional ground surface model provided by the method according to the first aspect of the present invention.

According to a fifth aspect, the invention provides an apparatus for performing a 3-dimensional ground surface model of a ground surface surrounding a vehicle, wherein said apparatus comprises:
(a) a built-in radar system of the vehicle adapted to provide radar data on the surrounding ground surface;
(b) a generation unit adapted to generate a radar surface height map on the basis of the radar data provided by said built-in radar system.

In a possible embodiment of the apparatus according to the fifth aspect of the invention the apparatus further comprises a calculation unit adapted to derive a ground surface model from the generated radar surface height map, said derived ground surface model being used as the 3-dimensional ground surface model.

In a possible embodiment of the apparatus according to the fifth aspect of the present invention, the generated radar surface height map or the derived ground surface model is stored temporarily in a memory of the apparatus for further processing.

In a further possible embodiment of the apparatus according to the fifth aspect of the present invention, the built-in radar system provides radar data on the surrounding ground service in a predetermined radar data grid.

In a still further possible embodiment of the apparatus according to the fifth aspect of the present invention, the radar data provided by the built-in radar system of the vehicle is filtered by a signal filter to reduce signal noise.

According to a sixth aspect of the present invention, a system for generating a composite surround image displayed on a display to a driver of the vehicle is provided said system comprising
onboard cameras adapted to provide camera images which are stitched by a processing unit to generate the composite surround view image using a 3-dimensional ground surface model provided by the apparatus according to the fifth aspect of the present invention.

According to a further seventh aspect of the present invention, a system for calibrating continuously onboard cameras of a vehicle on the basis of a ground surface model is provided, wherein the 3-dimensional ground surface model is provided by an apparatus according to the fifth aspect of the present invention.

According to an eighth aspect of the present invention, a system for performing obstacle range finding is provided said system using a 3-dimensional ground surface model provided by an apparatus according to the fifth aspect of the present invention.

According to a ninth aspect of the present invention, a vehicle is provided comprising
a system for generating a composite surround view image according to the sixth aspect of the present invention and/or a system for calibrating continuously onboard cameras of the vehicle according to the seventh aspect of the present invention and/or
a system for performing obstacle range finding according to the eighth aspect of the present invention.

In a possible embodiment of the vehicle according to the ninth aspect of the present invention, the vehicle moves on a road ground surface or on an off-road ground surface.

The vehicle can be a land vehicle such as a vehicle or truck moving on firm ground forming the ground surface.

The vehicle can also be a ship moving on water, wherein the water surface forms the ground surface modelled by the 3-dimensional ground surface model.

In the following, possible embodiments of the different aspects of the present invention are described in more detail with reference to the enclosed figures.
- Fig. 1: Fig. 1 shows in a flowchart of a possible embodiment of a method for providing a 3-dimensional ground surface model of a ground surface surrounding a vehicle according to the first aspect of the present invention;
- Fig. 2: shows a block diagram of a possible embodiment of a system comprising an apparatus for providing a 3-dimensional ground surface model of a ground surface surrounding a vehicle according to the present invention;
- Fig. 3: shows a diagram for illustrating the different applications using a 3-dimensional ground surface model provided by the method and apparatus according to the present invention;
- Fig. 4: shows a diagram for illustrating the generation of radar surface height map on the basis of radar data of a built-in radar system of a vehicle according to the present invention;
- Fig. 5: shows a diagram for illustrating the process of mapping camera image points according to the present invention.

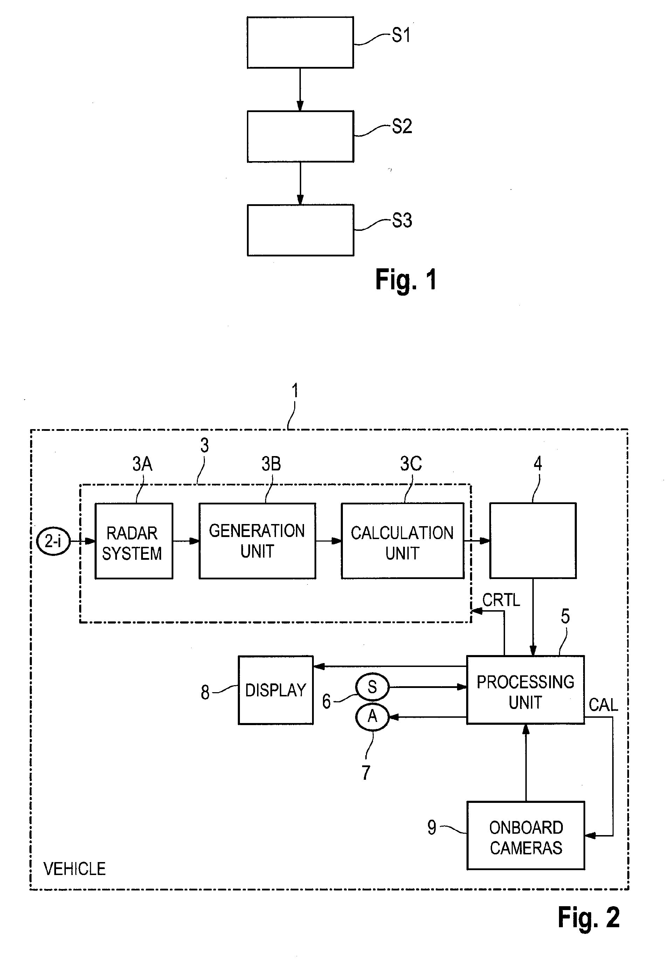

As can be seen in Fig. 1, the method for providing a 3-dimensional ground surface model of a ground surface surrounding a vehicle according to the first aspect of the present invention comprises in the illustrated embodiment several main steps.

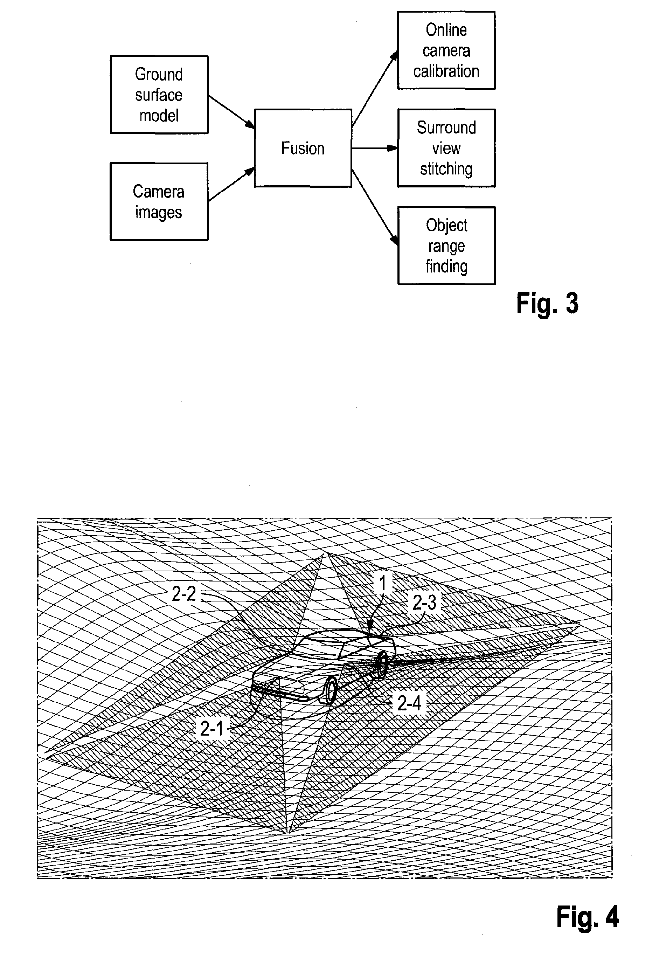

In a first step S1, radar data on the surrounding ground surface is provided by a built-in radar system 3A of the vehicle 1 as shown in Fig. 2. Fig. 4 illustrates the generation of the radar data while employing a built-in radar system 3A of a vehicle 1. The vehicle 1 shown in Fig. 4 is a car moving on an uneven ground surface. Fig. 4 illustrates the radar coverage from external radar sensors 2-1, 2-2, 2-3, 2-4 attached to the vehicle 1. A built-in radar system 3A of the vehicle 1 is connected to the radar sensor 2-i as illustrated in Fig. 4 and receives radar data from the radar sensors 2-I in real-time. The radar sensors 2-i transmit pulses of radio waves or microwaves which bounce off at any object in the surrounding. The objects including the ground surface return a portion of the radio waves' energy to an antenna which is usually located at the same side as the transmitter of the radar sensor 2-i. The radar system 3A, receiving the sensor signals from the radar sensors 2-i does provide positional information data on many points on the surrounding ground surface in a grid arrangement. The radar system 3A provides radar data on the surrounding ground surface in a predetermined radar data grid as illustrated in Fig. 4. In a possible embodiment, the radar data received from the radar data sensors 2-i is filtered by signal filters to reduce signal noise.

In a further step S2 as illustrated in Fig. 1, a radar surface height map is generated on the basis of the provided radar data. In a possible embodiment the radar surface height map is used as the 3-dimensional ground surface model. It can be used for improved mapping. In a possible embodiment the radar surface height map is used to map single points for object range funding. Further the radar surface height map can directly be used for online calibration.

In a possible embodiment in a further step S3, the 3-dimensional ground surface model is derived from the generated radar surface height map. Since the radar data provides a coarse grid of the ground height, interpolation can be performed between radar ground data points to map to a specific point on the ground surface. In a possible implementation, interpolation between the radar ground data points can be linear. In a further implementation, one can use more complex interpolations such as a bicubic or polynomial interpolation to achieve greater accuracy depending on the density of the radar data grid and the required accuracy. The transformation in step S3 of the radar surface height map into a 3-dimensional ground surface model having a different 3D model format such as a mesh can be performed for texture mapping during surround view generation.

Fig. 2 shows a block diagram for illustrating a possible embodiment of an apparatus 3 for providing a 3-dimensional ground surface model according to the second aspect of the present invention. As can be seen in Fig. 2, the apparatus 3 can be integrated in a vehicle 1 such as car moving on a land surface or a ship moving on a water surface. The apparatus 3 comprises the built-in radar system 3A to which several radar sensors 2-i are connected. The number of radar sensors 2-i can vary depending on the application and the size of the vehicle 1. The built-in radar system 3A of the apparatus 3 is adapted to provide radar data on the surrounding ground surface surrounding the vehicle 1. The radar data of the radar system 3A is supplied to a generation unit 3B which is adapted to generate a radar surface height map on the basis of the received radar data. The generated radar surface height map can be output by the generation unit 3B to a calculation unit 3C which is adapted to derive a 3-dimensional ground surface model on the received radar surface height map. The derived 3-dimensional ground surface model can then be stored at least temporarily in a data memory 4 as illustrated in Fig. 2. The provision of the calculation unit 3C is optional. In a possible embodiment the radar surface height map is directly stored in the data memory 4 and used as a 3-dimensional ground surface model for mapping purposes.

A processing unit 5 has access to the data memory 4 which can read out a current 3-dimensional ground surface model stored in the data memory 4.

If the vehicle 1 is formed by a car or truck standing still on firm ground, the ground surface does not change and consequently the 3-dimensional ground surface model stored in the memory 4 is constant. However, if the vehicle 1 moves on a ground surface such as a road plane, the ground surface surrounding the vehicle changes continuously. Consequently, the 3-dimensional ground surface model stored in the memory 4 is also updated. In a possible embodiment, the data memory 4 does not only store the current 3-dimensional ground surface but also previous 3-dimensional ground surface models. By processing a plurality of 3-dimensional ground surfaces stored in the memory 4, it is for instance possible in a specific application, to calculate a complete surface profile, for instance of a road from a start point to an end point. Further, the ground surface models stored in the data memory 4 of a black box can be evaluated, for instance after an accident of the vehicle 1, to find possible causes for the respective accident.

The 3-dimensional ground surface model of the surrounding ground surface is updated continuously, for instance with a predetermined update rate.

In the embodiment shown in Fig. 2, the processing unit 5 can be connected to one or several sensors 6 comprising for instance a speed sensor measuring the relative velocity V of the vehicle 1 when moving on the ground surface. The processing unit 5 might also control one or several actuator units 7 as illustrated in Fig. 2. As shown in Fig. 2, the processing unit 5 can be connected to a display 8 which can display a composite surround view image to a driver of the vehicle 1. Moreover, the processing unit 5 can control the apparatus 3, for instance its update rate for generating the 3-dimensional ground surface model stored in the data memory 4.

The processing unit 5 receives in the shown embodiment camera images from onboard cameras 9 of the vehicle 1. The processing unit 5 can perform an online calibration CAL of the onboard cameras 9 using the 3-dimensional ground surface model stored in the memory 4. The number of onboard cameras 9 attached to the vehicle 1 can vary. For instance, four onboard cameras can be implemented at the left, right, front and rear side of the vehicle 1. The onboard cameras 9 provide camera images to the processing unit 5.

The processing unit 5 can comprise one or several microprocessors for performing different applications such as camera calibration, ground view imaging or obstacle range finding. The processing unit 5 can comprise an image processor receiving camera images from the onboard cameras 9 of the vehicle 1. The calculation unit 3C of the apparatus 3 continuously provides updates for a 3-dimensional ground surface model which has a high bit density because of the performed interpolation of the radar data. This dense 3-dimensional surface model improves the calibration results during online calibration of the onboard cameras 9 and improves the composite surround view image displayed to the driver on the display 8. In a possible embodiment, the surface data can undergo a fusion over multiple frames or images for greater accuracy using for instance vehicle odometry data or vision-based ego motion of the vehicle 1.

The processing unit 5 is adapted to perform one or several vehicle applications. The processing unit 5 can perform a surround view stitching of camera images received from the onboard cameras 9 using the 3-dimensional ground surface model stored in the memory 4 to generate a composite surround view image displayed to the driver of the vehicle 1. Accordingly, the processing unit 5 can combine multiple camera images with overlapping areas and produce a segmented composite view or panorama. The image stitching process performed by the processing unit 5 comprises image registration, image calibration and blending. Image registration involves matching features in a set of camera images of the surrounding. Image calibration is performed in a possible implementation to minimise differences between the lens model and the camera lens combination of the onboard cameras 9. Blending involves the execution of adjustments figured out in the calibration stage combined with remapping of the camera images to an output projection.

Fig. 3 illustrates a use of a 3-dimensional ground surface model as stored in memory 4 with a camera vision system to enable online calibration, surround view stitching and object range finding. The ground surface model stored in the memory 4 can receive camera images from the onboard cameras 9. The processing unit 5 can perform one or several applications to perform online camera calibration and/or surround view stitching and/or object range finding.

For obstacle range finding and online calibration of the onboard cameras 9, the radar data can be used to map a detected feature in the camera's image to an accurate 3D position of a surface ground by finding an intersection with the 3-dimensional surface data instead of a conventional flat plane used in conventional systems. For surround view image mapping, the 3-dimensional surface model of the ground surface can be used to perform a mapping employing texture mapping techniques. Since the composite surround view image is updated in real time and the ground surface surrounding the vehicle 1 is constantly changing, the mapping can be optimised using 3-dimensional graphics methods. For instance, a Delaunay triangulation can be used to generate a 3-dimensional triangular mesh of faces from the 3-dimensional ground surface model and perform a texture mapping. Bicubic and polynomial interpolation of radar data as performed by the calculation unit 3C to create a denser surface model assuming local smoothness. This can improve calibration results and improve the aesthetics of the composite surround view image. Features in the 3-dimensional surface map can be tracked and matched between samples over time to improve accuracy.

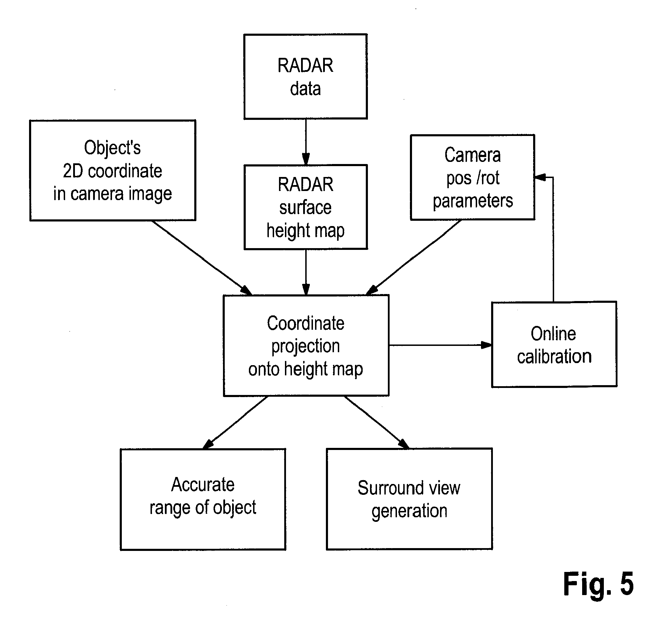

Fig. 5 illustrates the process of mapping camera image points to an uneven ground surface using the 3-dimensional ground surface model and camera position and orientation parameters from calibration. An advantage of the present invention resides in that many vehicles comprise a built-in radar system already. The radar data generated by such a built-in radar system used by the method and apparatus according to the present invention can generate an accurate 3-dimensional ground surface model which can be used for different applications. An application software executed by microprocessors of the processing unit 5 can use the data of the 3-dimensional ground surface model stored in the memory 4 and perform for instance continuous online camera calibration of the onboard cameras 9 and surround view stitching of camera images to generate a composite surround view image displayed to the driver or other applications including an obstacle range finding of an obstacle in the surrounding of the vehicle 1.

The 3-dimensional ground surface model provided by the method and apparatus according to the present invention can be used for a wide range of applications. For instance, actuators such as actuator 7 shown in Fig. 2 can be controlled by the processing unit 5 using the 3-dimensional ground surface model stored in the memory 4.

As an exemplary further application, dampers or shock absorbers of the vehicle 1 can be controlled by the processing unit 5 on the basis of the 3-dimensional ground surface model provided by the apparatus 3 according to the present invention. For instance, the impact of a hole on the road surface can be anticipated so that the shock observer or damper can be controlled to absorb expected impact caused by the hole in the road surface.

In a possible embodiment, the density of the data grid of the 3-dimensional ground surface model is adjusted depending on the application using the 3-dimensional ground surface model. For instance, for surround view imaging, the density of the data grid of the 3-dimensional ground surface model must be relatively high, whereas for other applications, a lower density is sufficient. Depending on the application executed by the processing unit 5, the processing unit 5 can control the apparatus 3, in particular the calculation unit 3C of the apparatus 3, to provide a 3-dimensional ground surface model with a fitting adjusted data grid density. In a possible embodiment, several application softwares are executed by the processing unit 5 in parallel. Depending on the executed applications, both the data grid density of the 3-dimensional ground surface model stored in the memory 4 as well as the update rate for generating the 3-dimensional ground surface model can be controlled and adjusted by the processing unit 5. Depending on the applications and sensor data provided by the sensors 6, the processing unit 5 can also control the radar system 3A and the radar sensors 2-i connected to the radar system 3A. For instance, when moving on a surface, obstacles in front of the vehicle 1 are more relevant than obstacles behind the vehicle 1. In this scenario, the processing unit 5 can activate radar sensors 2-i at the front of the car and deactivate at least some of the radar sensors at the rear side of the car. In this implementation, the data density of the 3-dimensional ground surface model stored in the memory 4 is not homogeneous but varies in different directions. For example, the density of the data grid of the 3-dimensional ground surface in an area in front of the car can be higher corresponding to a more accurate 3-dimensional ground surface model than for instance data modelling the surrounding area at the rear side of the car. In this way it can be possible to speed up data processing.

The surround view composite image displayed to the driver on display 8 can support the driver in different driving situations such as parking and turning or watching blind spots. A possible image representation is the form of a bird's eye view perspective. The processing unit 5 can comprise a video processing entity which does stitch the camera images provided by the onboard cameras 9 together in order to obtain a final panorama composition view. To avoid undesired artefacts which can appear when the camera images are stitched together with the overlapping areas of camera images blending techniques can be used. The field of view FOV of the cameras 9 can vary. Onboard cameras 9 provide images with a large field of view FOV. In a possible implementation, four cameras around the vehicle 1 are used to create a 360° view of the surrounding. For example, every camera can be equipped with a wide-angle lens that provides a field of view FOV of 135°. Also, it is possible to use fisheye lenses to provide a field of view near 180°.

In a possible exemplary embodiment, the vehicle 1 is a car, bus of truck moving on a relatively smooth road surface or off-road. The vehicle 1 can also be a robot moving on a ground surface, for instance in a factory. The method and apparatus according to the present invention can be used for any object moving on a surface.

## Claims

1. A method for providing a 3-dimensional ground surface model of a ground surface surrounding a vehicle (1), the method comprising:
(a) providing (S1) radar data on the surrounding ground surface by a built-in radar system (3A) of the vehicle (1);
(b) generating (S2) a radar surface height map on the basis of the provided radar data.

2. The method according to claim 1,
wherein a ground surface model is derived from the generated radar surface height map and used as the 3-dimensional ground surface model or the generated radar surface height map is directly used as the 3-dimensional ground surface model.

3. The method according to claim 1 or 2,
wherein the built-in radar system (3A) provides the radar data on the surrounding ground surface in a predetermined radar data grid.

4. The method according to claims 1 to 3,
wherein the radar data is filtered to reduce noise.

5. A method for performing surround view stitching of camera images provided by onboard cameras (9) of a vehicle (1) on the basis of the 3-dimensional ground surface model provided by the method according to claims 1 to 4 to generate a composite surround view image displayed to a driver of the vehicle (1).

6. A method for performing a continuous camera calibration of onboard cameras (9) of the vehicle (1) on the basis of the 3-dimensional ground surface model provided by the method according to one of the preceding claims 1 to 4.

7. A method for performing obstacle range finding using the 3-dimensional ground surface model provided by the method according to one of the preceding claims 1 to 4.

8. An apparatus (3) for providing a 3-dimensional ground surface model of a ground surface surrounding a vehicle (1), the apparatus (3) comprising:
(a) a built-in radar system (3A) adapted to provide radar data on the surrounding ground surface;
(b) a generation unit (3B) adapted to generate a radar surface height map on the basis of the radar data provided by said built-in radar system (3A).

9. The apparatus according to claim 8, further comprising a calculation unit (3C) adapted to derive a ground surface model from the generated radar surface height map to be used as the 3-dimensional ground surface model of the ground surface surrounding the vehicle.

10. The apparatus according to claim 8 or 9,
wherein the generated radar surface height map or the derived 3-dimensional ground surface model is temporarily stored in a memory (4) connected to the apparatus (3) for further processing.

11. The apparatus according to claims 8 to 10,
wherein the built-in radar system (3A) provides the radar data on the surrounding ground surface in a predetermined radar data grid.

12. A system for generating a composite surround view image displayed on a display (8) to a driver of a vehicle (1), said system comprising:
onboard cameras (9) adapted to provide camera images which are stitched by a processing unit (5) to generate the composite surround view image using a 3-dimensional ground surface model provided by the apparatus (3) according to one of the preceding claims 8 to 11.

13. A system for calibrating continuously onboard cameras (9) of a vehicle (1) on the basis of a 3-dimensional ground surface model provided by the apparatus (3) according to one of the preceding claims 8 to 11.

14. A system for performing obstacle range finding using a 3-dimensional ground surface model provided by the apparatus (3) according to one of the preceding claims 8 to 11.

15. A vehicle (1) comprising:
a system for generating a composite surround view image displayed on a display (8) of the vehicle (1) according to claim 12, and/or
a system for calibrating continuously onboard cameras (9) of the vehicle (1) according to claim 13, and/or
a system for performing obstacle range finding according to claim 14.
